# EUROPEAN PATENT SPECIFICATION

(11) **EP 4 654 568 B1**
(45) Date of publication and mention of the grant of the patent: **25.11.2026**
(21) Application number: 25172299.7
(22) Date of filing: 24.04.2025
(51) Int. Cl.: H04M 7/00, H04M 3/22, G10L 15/26, H04L 67/306

(54) **A METHOD FOR REAL-TIME VOICE COMMUNICATION**
VERFAHREN ZUR ECHTZEITSPRACHKOMMUNIKATION
PROCÉDÉ DE COMMUNICATION VOCALE EN TEMPS RÉEL

(30) Priority: 21.05.2024 GB 202407231
(43) Date of publication of application: 26.11.2025
(73) Proprietor: Vodafone Group Services Limited, Newbury, Berkshire RG14 2FN (GB)
(72) Inventor: McALLISTER, Thaddeus, London, W2 6BY (GB)
(74) Representative: Boult Wade Tennant LLP

(56) References cited:
- EP-A1- 4 254 921
- US-A1- 2013 304 457

## Description

### TECHNICAL FIELD

This present disclosure relates to the field of voice communication. In particular, the present disclosure relates to a method for improving real-time voice communication over a telecommunication network having a voice channel and a data channel.

### BACKGROUND

Digital voice calls enable users to deliver voice information over the internet rather than using traditional voice channels, e.g. rather than using the PSTN (Public Signalling Telephone network) telephone network. Digital voice calls use the internet to transmit voice data between devices. Examples of digital voice calls are Voice over New Radio (VoNR), Voice over LTE (VoLTE) over IP Multimedia Subsystem (IMS), Voice over Internet protocol (VoIP) over an IP bearer, or prerecorded voice notes. Digital voice may be streamed over Real-time Transport Protocol (RTP), or over User Datagram Protocol (UDP), where both RTP and UDP are configured to provide real-time streaming of voice data. Therefore, digital voice enables voice calls to be made in real-time without relying on a normal voice channel.

Digital voice calls such as VoLTE (IMS), VolP or pre-recorded voice notes provide advantages such as lower costs for consumers, increased functionalities, and enabling better call quality. Therefore, the use of digital voice calls is becoming increasingly popular.

However, digital voice calls require sufficient bandwidth to be available in order for the digital voice call to be possible, whilst digital voice calls themselves often consume a large amount of bandwidth. Therefore, by using digital voice calls instead of analogue voice calls, i.e. traditional non-digital voice calls, the bandwidth that is available for other applications using the same internet connection is reduced. As the mobile spectrum and fibre capacity is limited, and demand for bandwidth is increasing, the use of digital voice calls such as VoLTE, VolP can have negative consequences as it uses bandwidth which may be required by other devices. Therefore, the use of digital calls may have an impact on consumer experience.

US6226361B1 describes a communication method for voice transmission through internet networks. A method is described in which a voice of a talking person is inputted through a voice to electric conversion element such as a microphone to a voice inputting and outputting element, by which the voice signal is converted into a corresponding voice data electric signal. The voice data are inputted to a speech recognition and conversion section, by which they are converted into a character code data signal by speech synthesis. The character code data signal is transmitted to the reception side, where the character code can be synthesized into a voice data. It is described that such a method reduces communication delay and avoids problems involved in speech recognition. However, such a method has the disadvantage that if the internet connection, through which the character code data is transmitted, is poor, there will still be a delay to the communication, as the time taken for the character code data to be received at the reception side will be increased. The method has the additional problem that the quality of the data transmission and reception cannot be improved, as it is reliant on the internet connection. Therefore, although the method may reduce delay compared to previous methods of internet voice communication, the voice communication is not guaranteed to be achieved in real-time, nor is it guaranteed to be of good quality.

WO 2014059585 describes an instant call translation system and method. The system comprises a divider, a voice recognition device, a translation device and a voice synthesizer, wherein the divider is connected to a switch and divides an inputted voice signal into one or more audio files; the voice recognition device is connected with the divider and is used for transcribing the one or more audio files into texts in source language; the translation device is connected with the voice recognition device, and is used for translating the texts in the source language into texts in objective language; and the voice synthesizer is connected with the translation device, and is used for converting the texts in the objective language into output voice signals and outputting the voice signals to the switch. The method has the advantage that by using the instant call translation system and method, both call sides with language barrier can freely communicate with each other in real time. However, such a method is reliant on the internet connection, and therefore if this is of poor quality, the communication may not be in real-time, and would be noticeable to the user. Furthermore, it would be obvious to a user that the voice communication is based on text transcription and voice synthesis, as the synthesised the voice is not based on the original speaker.

US 2013/304457 A1 describes a method capable of adaptively operating at least one of a Speech To Text (STT) service and a Text To Speech (TTS) service according to setting or user operation. The method includes requesting a specific type of a communication service connection to a reception side terminal by a transmission side terminal, performing an operation of at least one of a speech to text service providing speech recognition based text and a text to speech service converting text into speech data between the reception side terminal and the transmission side terminal, and recognising speech data provided from the transmission side terminal and converting the speech data into text based on a first speech process supporting device connected to the transmission side terminal.

### SUMMARY

Against this background, the present disclosure provides a method according to claim 1 for real-time voice communication over a telecommunication network having a voice channel and a data channel and a mobile device according to claim 13. Further embodiments are set out in the dependent claims.

In a first aspect there is provided a method for real-time voice communication over a telecommunication network, where the telecommunication network has a voice channel and a data channel. The method comprises receiving, at the first device, speech input from a first user. Subsequently, voice input data is generated at the first device, based on the received input, and text data is generated from the received voice input data. The location at which the text data is generated is based on compatibility of the first device, i.e. whether the first device is compatible with speech to text. Voice output data is generated from the generated text data, where the generated voice output data is generated based on a first user profile. The location at which the voice output data is generated is based on the compatibility of the second device, i.e. whether the second device is compatible with text to speech. The user profile is a profile associated with the first user. The voice output data is processed at the second device to generate speech output, and the generated speech output is output at the second device. The quality of the generated speech output is monitored.

The method of the first aspect has the advantage that voice communication is provided in real-time by being carried out over a telecommunication network. The telecommunication network has a voice channel and a data channel, and therefore it is possible to send voice data over either the voice channel or the data channel. This has the advantage that the voice data can be sent by either channel which provides the best quality, or lowest latency, to enable the voice communication to be achieved in real time. The method converts voice data to text data, where the voice data has been generated at the first device, and the voice data is then converted to text data. The text data is converted back to voice data and is processed at the second device to provide speech output. It has been appreciated that by converting voice data to text data, bandwidth usage can be reduced as it is possible to transmit text data over a channel of the telecommunication network rather than transmitting voice data. The voice data can then be re-generated from the text data to provide speech output data which can be output to the user of the second device, where the second device is in a call with the first device. This method results in a decrease in bandwidth usage as it has been appreciated by the present inventors that transmitting text data uses less bandwidth than transmitting digital voice data, and mobile devices currently have enough processing power to provide text-to-speech and speech-to-text synthesis in real-time. It has also been appreciated by the present inventors that excess compute capacity is available, and new machine learning models are capable of near real-time text-to-speech and speech-to-text synthesis. Therefore, by using such capabilities it is possible to choose to increase processing in order to reduce the burden on bandwidth. Therefore, it has been appreciated herein that the transmission of text data overcomes problems found in known methods.

Furthermore, the method of the first aspect provides an additional advantage that the voice output data is generated based on a user profile, which is associated with the user of the first device. Therefore, the voice output data can be generated to sound similar to the user of the first device, i.e. the user who spoke the original words. Therefore, by providing a method which enables real-time voice communication, and an output speech which sounds like the user of the first device, it is possible to provide a call experience which may be indistinguishable from an analogue voice call. Furthermore, the method enables quality of the output speech to be monitored so that if the quality of the call is not high enough, for example the latency is too high, it is possible to improve the communication between the first and second devices.

It has been realised herein that it is advantageous to reduce bandwidth used by voice communication, whilst achieving real-time voice communication and maintaining the quality of the call. Therefore, the disclosure herein provides examples which provide a balance between these factors to provide an improved method for real-time voice communication.

In the first aspect there is provided a method for real-time voice communication over a telecommunication network having a voice channel and a data channel according to claim 1.

Optionally the latency may be determined based on the speed at which speech is converted to text. This latency may be determined by measuring the time taken for text to be converted to speech. For example, the device on which the text is converted to speech may measure the time from text input to speech output. The time taken to convert text to speech may be dependent on the capabilities of the device.

Optionally the latency may also be dependent on the time taken for text data to be sent from the first device to the second device. For example, the time between sending the text from a first device, and receiving, at the first device, an acknowledgement of receipt from the second device (and vice versa) can be determined.

Optionally the method may further comprise, prior to generating voice input data, determining the compatibility of each of the first and second devices. In one example it may be determined whether the first device (e.g. a mobile application installed on the first device) is compatible with speech-to-text (STT) (i.e. whether it can covert speech data to text data) and text-to-speech (TTS) (i.e. whether it can convert text data to speech data). This has the advantage that it is possible to determine whether each of the first and second devices are compatible with the method of communicating directly between the first and second device. For example, in one example the method is carried out by a mobile-based application being downloaded on a device, and therefore the determining step may include determining whether each mobile device has the mobile-based application downloaded onto it. In some cases, the method of communication may differ based on whether both devices have the mobile-based application installed, or whether only one device has the mobile-based application installed. Therefore, such a step in the method enables the devices to determine the most suitable method for voice communication, rather than attempting one method of voice communication which may not be compatible with both devices, and therefore result in a delay while the data needs to be resent between the devices.

Optionally, it may be determined that both the first and second devices are compatible. In this case the step of generating the text data may be performed at the first device, and the step of generating voice output data may be performed at the second device. The method for voice communication further comprises sending the generated text data from the first device to the second device, over a data channel of the telecommunication network. In this example, the text is generated at the first device, and therefore the processing of the voice input data and its transcription (i.e. STT) is performed at the first device. The voice data is then sent to the second device, where the voice output data is generated based on the received voice data. Therefore, the method reduces the bandwidth required for voice communication as no voice data is transmitted over the data channel of the telecommunication network. Instead, only text data is transmitted over the data channel, which requires a lower bandwidth to send over the network. Therefore, this method reduces latency and bandwidth usage.

Optionally it may be determined that the quality of the speech output reaches a threshold. The threshold may be any suitable threshold. For example, the threshold may be a predetermined latency, or it may be a predetermined quality where the threshold is reached when the quality is too low. In this case the method may comprise sending the voice output data from the first device to the second device over the voice channel of the telecommunication network. This has the advantage that if the quality is too low, or the latency is too high, the method may instead comprise sending voice data from the first device to the second device over a voice channel, rather than over a data channel. This has the advantage that it may be determined that a voice channel would provide a better quality of call, or a call with a reduced latency compared to the data channel. Therefore, the user will receive the best call experience as the voice channel can be used to improve quality, and maintain the real-time voice communication, rather than performing the method over a poor-quality data channel.

Optionally it may be determined that the second device is not compatible. In this case the step of generating the text data may be performed at the first device, and the step of generating the voice output data may be performed at a server. The method may further comprise sending, over the data channel of the telecommunication network, the generated text data from the first device to the server; and sending, over the data channel of the telecommunication network, prior to processing the voice output data, the generated voice output data from the server to the second device. In this example, the text data may be generated at the first device, but it may be determined that the second device is not compatible. For example, the second device may not have the necessary mobile-based application to enable it to receive text data and generate voice data from the text data. Therefore, the text data is sent to a server instead, where the server may be in wireless communication with both the first and second devices. The server may generate voice output data from the text data, and send the voice output data to the second device where it may be processed to provide speech output data. This has the advantage that although the second device is not compatible, the bandwidth usage may be reduced by sending text data from the first device to the server, rather than sending voice data from the first device to the second device.

Optionally it may be determined that the first device is not compatible. In this case the step of generating the text data is performed at a server, and the step of generating the voice output data is performed at the second device. The method may further comprise sending, over the data channel of the telecommunication network, prior to generating the text data, the input voice data from the first device to the server; and sending, over the data channel of the telecommunication network, the generated text data from the server to the second device. In this example, it may be determined that the first device is not compatible and therefore the first device is not able to convert the input voice data to text data. For example, it may not have the necessary mobile-based application to enable it to generate text data from voice data. Therefore, the voice input data is sent to a server instead, where the server may be in wireless communication with both the first and second devices. The server may generate text data from the input voice data, and send the text data to the second device where output voice data may be generated. This has the advantage that although the first device is not compatible, the bandwidth usage may be reduced by sending voice data from the first device to the server to process the voice data, but still sending text data to the second device, rather than sending voice data from the first device to the second device, which may increase bandwidth usage.

In an example in which either the first or second devices are not compatible, and it is determined that the quality of the speech output reaches a threshold, the method may further comprise using an edge server instead of the server. The edge server may be located at a base station. The edge server may be a multiaccess edge computing (MEC) server. For exemplary purposes the edge server will be referred to as an MEC server, however any suitable edge server may be used instead. The MEC server is in communication with the first and second devices, and the MEC server is configured to generate text data and/or generate voice output data. The threshold may be a predetermined latency value, processing power value, or it may be a predetermined quality value where the threshold is reached when the quality is too low. The MEC server has the advantage that it can be located at the edge of the network closest to the first and second devices, and therefore its use can reduce latency as the MEC server may receive and transmit data to the first and second devices faster than using a server located elsewhere in the network.

In an example in which either the first or second devices are not compatible, and it is determined that the quality of the speech output reaches a threshold, the method may further comprise sending the voice output data from the first device to the second device over the voice channel of the telecommunication network. This may be carried out when sending data to and from a server has a latency which is too high, or it may be carried out after the communication method has switched to an MEC server and determined that the MEC server has not reduced latency enough to be below the required threshold. Therefore, this has the advantage that another fallback position is provided in which it is determined that the latency is too high, or the bandwidth usage is too high, to continue using a data channel for voice communications. Instead, the voice channel is used to continue providing a voice communication in real-time. This has the advantage that it may be determined that a voice channel would provide a better quality of call, or a call with a reduced latency compared to the data channel. Therefore, the user will receive the best call experience as the voice channel can be used to improve quality, and maintain the real-time voice communication, rather than performing the method over a poor-quality data channel.

Optionally, the method of data transmission may change during the voice call. For example, the method for voice communication from a first device to a second device may be over a data channel of a telecommunication network, whereas the method for voice communication from the second device to the first device may be over a voice channel of the telecommunication network. For example, the available bandwidth, or quality of the data channel may change during the call, such that the method used for voice communication is changed during the call. Alternatively or additionally, the voice communication may begin at a time when one device is not compatible with TTS and/or STT, but the device may become compatible during the call, or vice versa. Therefore, the voice communication method may begin by using a server as described herein to either generate text data (STT) or voice output data (TTS). However during the call it may be determined that both the devices are compatible, in which case the text data may be generated at the first device, and the voice output data generated at the second device.

The generated text data may be transmitted from a first device to a second device over a telecommunication network, where the telecommunication network has a voice channel and a data channel. Therefore, the generated text data may be received at the second device via the telecommunication network.

The voice input data and the text data may each be processed either at a device or at a server. In other words, the speech to text may be performed at a device or at a server. The text to speech may be performed at a device or at a server.

In the example in which the input voice data is processed at the first device (i.e. the text data is generated at the first device), the first device transmits the generated text data over a telecommunication network. In the example in which the input voice data is processed at an edge server (e.g. a MEC server), the server transmits the generated text data over a telecommunication network. In the example in which the generated text data is processed at an edge server (i.e. the edge server receives generated text data and converts to speech), the server may receive the text data via the telecommunication network and/or the server may transmit the voice output data over the telecommunication network.

Optionally, the step of generating text data may comprise generating text data with SSML. For example, the generated text may comprise SSML tags, such that the generated text comprises information related to the input voice data. For example, the generated text may comprise information relating to syntax or inflexion. The generated text may also comprise information such as length of breaks in speech. Therefore, the generated speech data may more accurately reflect the speech input data. In other examples, the generated text may be converted into SSML. In other words, the text data may converted into SSML in a separate step to the text generation.

Optionally the method may comprise establishing one of a Datagram Transport Layer Security (DTLS) and a Transport Layer Security (TLS) between the first and second device, or between a server and each of the first or second devices. This has the advantage that the communications may be sent between the devices, and/or between the devices and the server, in a secure manner. This is beneficial as the text data/voice data may not be encrypted. Therefore, by establishing DTLS or TLS, the data being sent over the telecommunication network is prevented from being intercepted or manipulated.

Optionally the step of monitoring the quality of the generated speech output comprises receiving quality information from a second user, wherein the second user is a user of the second device. This has the advantage that a user is able to inform the device that the quality is poor, or there is a lag (i.e. delay) in the call.

Optionally the method further comprises compressing the generated text data into a data stream. The generated text data may be compressed prior to sending the generated text data. This has the advantage that the bandwidth usage may be further reduced.

Optionally the method further comprises building the first user profile at the first and/or second device, wherein that the first user profile comprises information for replicating the first user's speech patterns.

Optionally the first user profile may be stored at the first and/or second device. Optionally the first user profile may be one of multiple user profiles stored on the first and/or second device. Optionally, the method further comprises determining that a user is a frequent contact of the device, and storing a user profile of the frequent contact at the device. Therefore, the relevant user profile can be easily and quickly accessed by the device for each of the frequently contacted users (i.e. contacts).

Optionally it may be determined that a user is a frequent contact by accessing call history information stored on the device. In other words, the device (e.g. a mobile based application installed on the device) may analyse call history. For example, a first device may determine that a call has been made between the first and second device multiple times, and therefore when a second device initiates a call with the first device, it can be determined at the second device that the first device is a frequent contact, and vice versa. It may be determined that a first device is a frequent contact of the second device if the number of calls between the first and second device exceeds a threshold, where the threshold is predetermined. Optionally a frequent caller may be determined based on the number of calls within a recent time period. For example, the device may consider the number of calls with the device in the previous 2 months, instead of considering call information from earlier time periods. In other examples, the device may determine that a device is a frequent contact by determining that it is in the top number of callers. For example, the five devices which are in contact with the device the most may be considered frequent callers. In another example, the device may use the duration of calls to determine whether a device is a frequent caller. Therefore, calls may not be considered if they are short in duration. For example if a call is frequently made to the device by a spam caller or unwanted caller (e.g. a call from an illegitimate company), the call may be short in duration, and therefore such a call may not be considered when determining frequent contacts.

Optionally, multiple users may use the same device. In this example the method may comprise determining a user from a plurality of users of the first device. Therefore, the second device, i.e. the device in a call with the first device, may use a user profile which corresponds to the specific user using the first device when generating the voice data. In this example, the device may analyse call history using information regarding specific users of the device. For example, it may be determined that one user of the first device contacts the second device frequently, however a second user of the first device does not contact the second device frequently. Therefore, the profile of the first user may be stored on the second device, whereas the profile of the second user may not be stored on the second device.

Optionally, the mobile application installed on the first device, as described herein, may request permission from the user to access any of contact information, call information, and text information (e.g. SMS, MMS, RCS, instant messaging) stored on the device. In some examples the text information may be gathered from another application installed on the first device.

Optionally a phone number may be used as an identifier, such that a device may be recognised by another device. The user profile may therefore be selected based on the identified phone number of the particular device. In other examples, different identifiers may be used to enable a specific user of a device to be identified, for example to distinguish between two users who use the same device. The identifier (i.e. user ID) may be unique to the user or to the device. For example, a user may log into the mobile based application through which the digital call is initiated. In this case, when a call is initiated or received by the mobile based application, the device may identify the user using the user ID and select the correct user profile. Therefore, in some examples a user may use any compatible device to initiate a call, whilst being able to be identified by other devices during a digital call.

Optionally the user profile may be stored on a network server, wherein the server is in wireless communication with at least one of the first or second devices. This has the advantage that the user profiles do not need to be stored on the devices themselves.

Optionally the telecommunication network is an Internet Protocol network. For example, the telecommunication network may be a cellular network according to at least one of a 2G, 3G, 4G, 5G communication standard. In another example, the telecommunication network may be a Wi-Fi network or another air interface. Alternatively, Voice over Wi-Fi (VoWiFi) may also be used to exchange data between the two devices.
In another aspect there is provided a second mobile device configured to be connected to a telecommunication network having a voice channel and a data channel according to claim 13.
In another aspect there is provided a system according to claim 14.

### BRIEF DESCRIPTION OF THE FIGURES

The present invention may be put into practice in a number of ways and embodiments will now be described by way of example only and with reference to the accompanying drawings, in which:
Figure 1 shows a schematic diagram of a system for voice communication over a data channel of a telecommunication network; and
Figure 2 shows a method of voice communication between a first and second device, according to an embodiment;
Figure 3A shows a further method of voice communication between a first and second device, according to an embodiment; and
Figure 3B shows a further method of voice communication between a first and second device, according to an embodiment;
Figure 3C shows a further method of voice communication between a first and second device, according to an embodiment;
Figure 4A shows a further method of voice communication between a first and second device, according to an embodiment;
Figure 4B shows a further method of voice communication between a first and second device, according to an embodiment;
Figure 4C shows a further method of voice communication between a first and second device, according to an embodiment; and
Figure 5 shows a system diagram according to an embodiment of the invention.

It should be noted that the figures are illustrated for simplicity and are not necessarily drawn to scale. Like features are provided with the same reference numerals.

### DETAILED DESCRIPTION OF THE PREFERRED EMBODIMENTS

Various aspects of the disclosure are described hereinafter with reference to the accompanying drawings. Examples are described herein, however, this disclosure may be embodied in many different forms and should not be construed as limited to any specific structure or function presented throughout this disclosure. The person skilled in the art should appreciate that the scope of the disclosure is intended to cover any aspect of the disclosure disclosed herein, whether implemented independently of or combined with any other aspect of the disclosure. For example, an apparatus may be implemented or a method may be practised using any number of the aspects set forth herein. In addition, the scope of the disclosure is intended to cover such an apparatus or method which is practiced using other structure, functionality, or structure and functionality in addition to or other than the various aspects of the disclosure set forth herein.

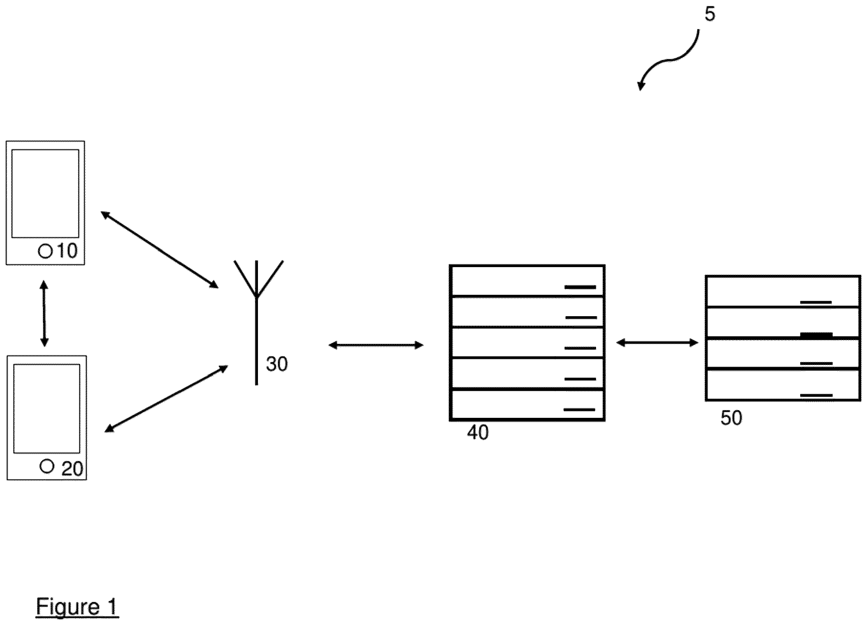

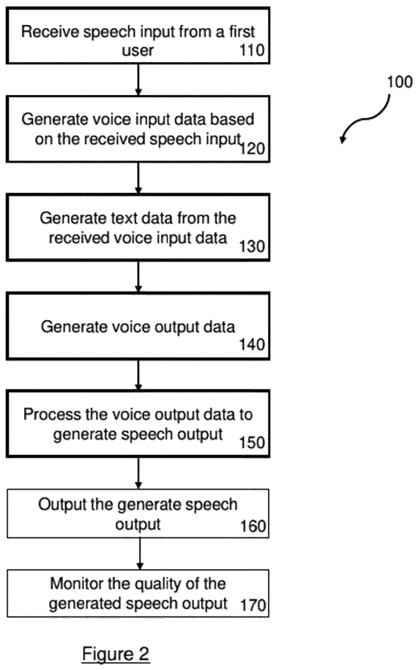

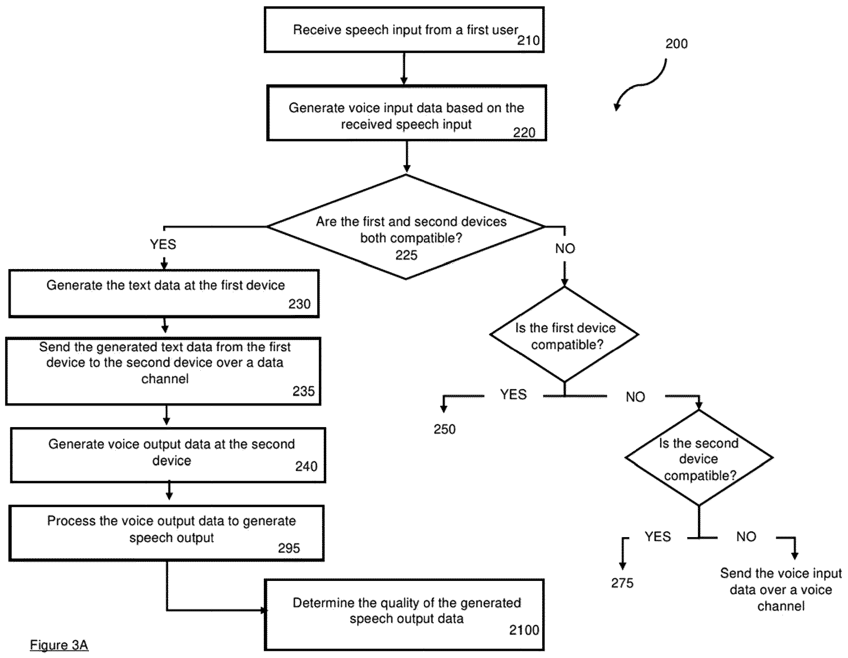

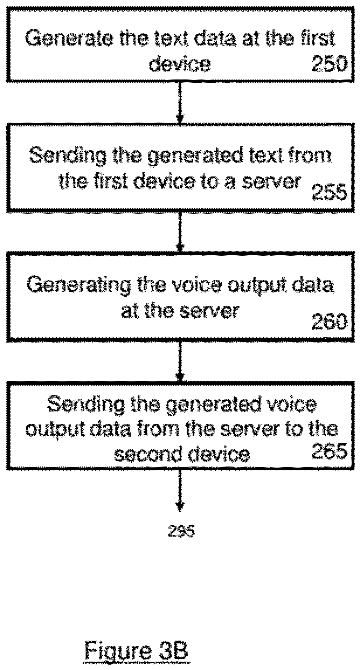

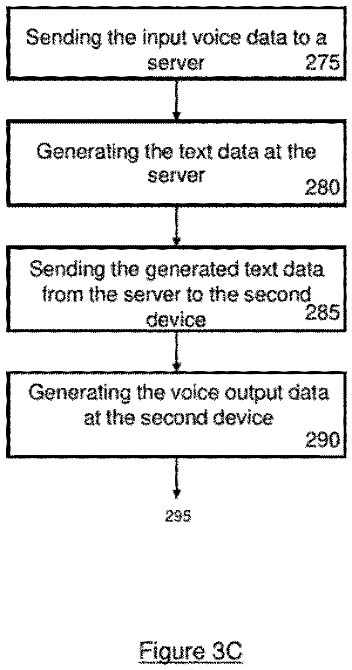

Figure 1 shows a schematic diagram of a system 5 for providing data communication between a first device 10 and a second device 20. In this example implementation the first and second devices are mobile devices, for example smartphones. However, the first and second devices may be any devices capable of receiving speech and outputting speech. For example, the devices may be wearable technology (e.g. smartwatches, VR headsets, headsets), or they may be devices such as laptops, vehicles. In other examples a mobile device may be connected to a wired or wireless speaker and/or microphone. The first device 10 and second device 20 have a data connection (e.g. cellular) with a base station 30 which is in communication with a core network 40. In the example in which, for example, a headset receives speech and outputs speech, the microphone and/or speaker themselves may not have a data connection with a base station, but instead may be connected to a mobile device via Bluetooth or Wi-Fi. The core network 40 includes one or more separate servers. One of the servers 50 can perform processing of voice data to convert voice data to text data, and/or the server can perform processing of text data to convert text data to voice data, as will be described in more detail with reference to figures 2 and 3A, 3B and 3C. In this example implementation, the processing server 50 is a multi-access edge computing (MEC) component. However, any suitable processer either within the core network 40 or outside of the core network may be used to carry out these processing steps.

The first and second devices may have a Universal Integrated Circuit Card (UICC), or SIM capable of receiving data services from the telecommunication network (e.g. 2G, 3G, 4G, 5G). Additionally or alternatively, the first and second devices may be configured to connect to the internet via Wi-Fi. The telecommunication network may have a voice channel and a data channel, such that one device may transmit data to another device via voice channel or a data channel, and vice versa.

As discussed above, the first and second devices are each in communication with a base station, and thus a server. However, the first and second devices may also be in communication with each other via a voice channel.

It will be appreciated that although the methods described herein are in relation to data being transmitted from a first device to a second device, the methods may be used in a call wherein data is also sent from the second device to the first device, and the same considerations will apply. Therefore, the methods described herein may be applied in both directions between the first and second devices to enable a real-time voice call. However, it will also be appreciated that in some examples, the methods may only be used in one direction, for example a user may send a voice message from a first device to a second device, where the second user can listen to the voice note on demand, i.e. at a later time.

Figure 2 shows a flowchart of an example method 100 for voice communication over a telecommunication network. As described herein, the telecommunication network has a voice channel and a data channel, via which voice data and/or text data can be transmitted from a first device to a second device. At step 110 of this method, a first device receives speech input from a first user. For example, the first device may be a smartphone which receives speech input from a user via a microphone on the smartphone. It will be appreciated that the user may instead utilise a microphone which is physically separate from the first device, for example the user may speak into a headset, wherein the headset comprises a microphone and speaker. Therefore, in this case, the headset receives speech input from a first user. The headset therefore may process voice input data based on the received speech input, and transmit this voice input data to the mobile device either via a wired connection or via a wireless connection, such that the first device receives speech input.

At step 120 the first device processes voice input data based on the received speech input. The device comprises software which processes the speech input. The speech input may be digitised using analog-to-digital (ADC) to convert the voice signal into digital data, wherein the digital data may be temporarily stored in the memory on the device.

As will be described herein, the method steps 130 and 140 may each be carried out at a first device, a second device, or a server. These specific examples will be described in more detail herein.

At step 130, text data is generated from the voice input data. For example, a speech-to-text algorithm (i.e. model) may be used to transcribe the voice data into text data. The speech may be converted to text using a method based on Hidden Markov Models (HMM). For example, a HMM can be defined for each unit of speech, such as a phoneme or a word, and then link together the HMMs to form a larger HMM that represents a sentence. The text data may be broken into packets of text data, such that the packets can be transmitted over a data channel of the telecommunication network. The use of HMM is one example, however any suitable natural language processing algorithm may be used. A natural language processing algorithm takes the voice input data and converts it into a format which the user device is able to recognise and understand.

At step 140, voice output data is generated from the generated text data. A text to speech (voice) algorithm (i.e. model) may be used to convert text to voice data. For example, text-to-speech (TTS) technology, i.e. speech synthesis technology, may be used to convert the text data to audio data. The text-to-speech technology may break (i.e. separate) the text data into phonetic components, where each phonetic component is synthesised and pieced together to form words, phrases and sentences. The generated voice data may be generated based on a user profile. The user profile may be a standard profile which is chosen from one or more user profiles provided to the device. Alternatively, the user profile may be associated with the user of the first device, i.e. the user who provided the speech input data to the first device. The user profile may therefore be generated to be unique to other profiles stored on the user device, or on a device which is in communication with the user device. The text-to-speech model may be chosen such the memory and processing requirements are not too great, and the model converts speech-to-text at a high speed. The models are chosen such that they can be run on either the first or second device (i.e. the end device), and the server. The text-to-speech model may incorporate Al to recognise patterns within the speech. For example, the text-to-speech model may incorporate deep learning to improve the performance of speech-to-text. Such requirements and features may apply to all of the text-to-speech models described herein. In other examples the text-to-speech model may use offline models. The offline models may be autoregressive acoustic models. One example of a text-to-speech model which uses autoregressive acoustic models is Tortoise TTS. Another example of a text-to-speech model which may be used is CMU Flite (festvox.org). However, it will be appreciated that any text-to-speech model which meets the requirements described herein may be used in the embodiments described herein.

The user profile may comprise voice information related to the unique characteristics of the user's voice. The user profile contains information suitable for replicating a user's speech pattern. For example, the voice information may comprise tone, pitch, cadence, accent, and other features of a user's voice. The user profile there may enable a mobile application (in other words the mobile device) to convert text data to voice output data having the characteristics of the user's voice. For example, the user profile may refer to a set of rules which map words in the text data to the corresponding phonemes, whilst also customising the sound of the spoken text. The user profile may be created using machine learning, wherein the model is trained based on one or more sets of data received from the user, such that the model can learn how different words are pronounced and spoken by the specific user. For example, the sets of data may be compiled during a previous call, or the user of the device may input data into the device before the first call. The user profile may be continuously updated with further use of the device by the same user. It will be appreciated that there may be more than one user who use the same device. Therefore, the mobile-based application may comprise a number of user profiles. Therefore, the user may select a particular user profile to be used in the call when initiating or joining a call with another device. The user profile may be stored on a server (i.e. network server) which is in communication with the first and second devices, such that either the server may use the user profile to convert text data to voice data, or the device may receive the user profile from the server before or during a call, such that the user profile may be used by the device when the device is converting text data to voice data. The user profile being stored on a server has the advantage that the user profile does not use up storage on the device. Alternatively, the user profile may be stored on a device, which has the advantage that the device does not need to request a user profile from a server during a call, and therefore latency may be reduced. In one example, some user profiles may be stored on the device (e.g. user profiles of the most frequently contacted users), and some user profiles may be stored on the server (e.g. user profiles of less frequently contacted users). The user profiles may be downloaded from the server, or uploaded to the server based on recent frequency of use.

At step 150 the generated voice output data may be converted to speech output at the second device, and at step 160 the speech data may be output at the second device. For example, the mobile device may output the speech via a speaker which is part of the device itself, or via a physically separate speaker which is in wired or wireless communication with the second device.

At step 170 the quality of the generated speech output may be monitored. It may be determined whether the quality of the generated speech output has reached a threshold. For example, the speech output may be monitored by a user, wherein the user may provide quality information if the quality falls below a threshold. For example, the user may determine that there is a delay in communication which is too great to have a conversation with the user of the other device, i.e. the conversation is not intelligible. Or, the user may determine that the quality of the speech input is too low, i.e. data has been lost during transmission. The user may use a voting mechanism to provide information regarding the quality. Alternatively, one or more of the mobile devices may determine that the quality reaches a threshold. For example, it may be determined that the latency exceeds a threshold. In one example, the threshold may be a latency of 100 milliseconds. In an example the latency may be determined by the transmitting device (e.g. the first device) by determining the time between sending text data, or voice data, and receiving an acknowledgement from the receiving device (e.g. the second device). In such an example there may be an underlying protocol layer which provides acknowledgement of receipt of messages received at either device. The data packet (i.e. message) transmitted from the first device to the second device, or server, may comprise a timestamp. In this case, it can be determined at what time the data packet was transmitted from the first device, and the time at which the data packet was received at the second device. Machine learning techniques may be used to automate the voting mechanism such when the voice quality and/or latency reaches a threshold, regular voice channels are used for voice communication (as described herein).

To further reduce latency in any of the examples described herein, the generated text data may be compressed into a data stream. In this case, the generated text data is compressed prior to sending the generated text data.

In some examples, if it is determined that a quality threshold has been reached, the voice data may be transmitted over a voice channel instead of a data channel. For example, during a call, it may be determined that a bandwidth is too low to transmit text data over a data channel. Therefore, the method of communication may be changed to a method which provides a better quality of call. For example, the voice data may be transmitted over a normal voice channel rather than being converted to text data. This will be described in more detail herein, for example in relation to figure 3A.

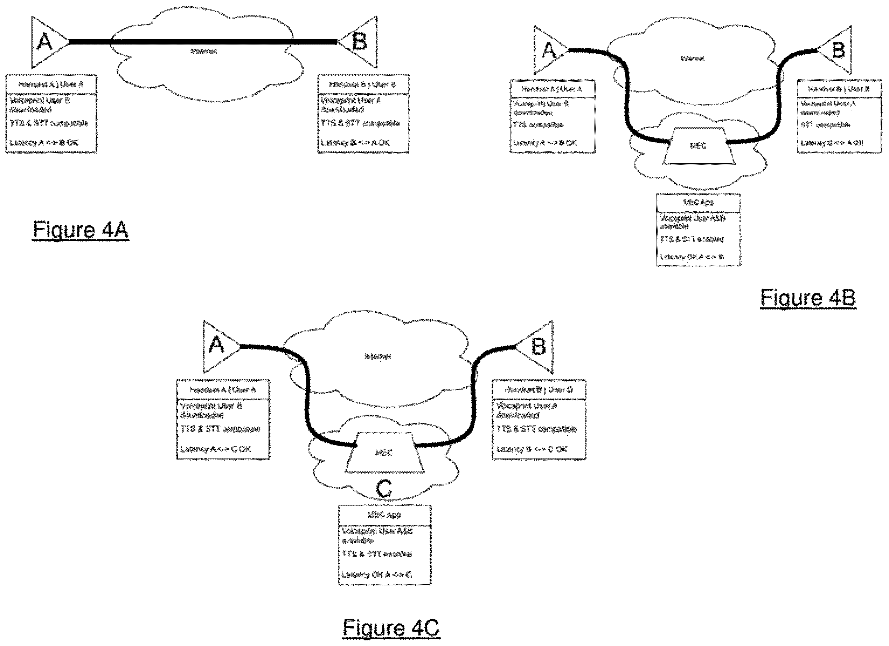

In some examples, if it is determined that a quality threshold has been reached for direct communication between a first and second device over a data channel, the method may comprise indirectly communication between the first and second device. For example, the first device may communicate with a server, and the server may communication with a second device, as will be described herein in relation to figure 4C.

Figure 3A shows a flowchart of an example method 200 for voice communication over a telecommunication network. It will be appreciated that for sake of description, the method is only described for sending data from the first device to the second device. However, in a real-time voice call, the method will also be used to send data from the second device to the first device, wherein the steps of speech-to-text and text-to-speech may be performed at the other device (i.e. speech-to-text will be performed at the second device rather than the first device). As in method 100, the first step of the method 210 comprises receiving speech input from a first user, where the speech input is received at a first device. Furthermore, at step 220 the method comprises generating voice input data based on the received speech input.

At step 225 it is determined whether the first and second devices are both compatible. For example, a request may be sent from one device to another, to determine whether each device is compatible with text-to-speech (TTS) and speech-to-text (STT). In other words, a call context is determined, and it may be determined whether a receiver is end-to-end compatible. In one example an application (e.g. mobile-based application or web-based application) is required to enable the mobile device to generate text data from voice data, and/or generate voice data from text data. For example, the mobile-based application may be a text-to-speech and/or a speech-to-text compatible application which uses one or more algorithms to convert between text and speech data. In some examples the devices may each comprise the same application, or different applications where the different applications are compatible with one another. Therefore, in step 225 it may be determined that the first device is compatible with STT (a first data conversion) and the second device is compatible with TTS (a second data conversion), or that the first device is compatible with STT but the second device is not compatible with TTS (or vice versa), or that neither of the devices are compatible with the respective data conversion.

Although step 225 is described as being carried out after voice input data is generated at a first device, the step may be carried out prior to speech input being received from a first user. Furthermore, in some examples there may be an additional step of sending one or more requests between the two devices in order to start a communication channel between the two devices. In other words, one or more requests may be sent between the first and second devices to initiate data transfer between the two devices, i.e. to initiate a digital voice call. The one or more requests may be sent from a first device to a second device in response to a user selecting a command on a mobile based application.

If it is determined that both the first and second devices are compatible, i.e. the first device is compatible with STT and the second device is compatible with TTS, the method continues to step 230, where text data is generated at the first device based on the voice input data. In other words, the voice input data is transcribed at the first device.

At step 235 the generated text data is sent from the first device to the second device. The generated text data is sent over a data channel over the telecommunication network.

At step 240 voice output data is generated at the second device. In other words, voice data is generated using text-to-speech technology at the second device.

At step 245 the voice output data is processed to generate speech output at the second device. In other words, speech is outputted from the second device.

As described in relation to method 100, the generated voice output data may be generated in step 240 based on a user profile. Therefore, the speech outputted by the second device may sound similar to or the same as the speech inputted to the first device. In other words, the speech outputted by the second device may be indistinguishable from the speech inputted into the first device. Therefore, the second user may not be able to determine that the voice data has been generated from text data. In some embodiments the user profile may not correspond to the user's voice. Instead, the user may select an alternative profile such that the voice outputted from the second device matches the selected user profile, where the selected user profile is different to the user's voice. Therefore, the speech output may differ to the input speech input, for example the tone of the speech output may be lower than the tone of the input voice. As the method 200 is performed in real-time, the digital voice call may be indistinguishable from a voice call using a normal voice channel.

After step 225, if it is determined that one of the first and second devices are not compatible (e.g. with TTS and STT), it may be determined which of the two devices is not compatible. In other words it is determined whether the first device is compatible with the STT, and whether the second device is compatible with TTS. In the case that the first device is compatible with STT, but the second device is not compatible with TTS, the method proceeds to step 250. In the case that the first device is not compatible, but the second device is compatible, the method proceeds to step 275. If it is determined that neither the first nor second device are compatible, the voice input data is transmitted over a voice channel. In other words, the voice input data is not converted to text data, and instead the voice data is sent between devices over a normal voice channel of the telecommunication network.

Figure 3B shows the method starting from step 250, such that the method shown in figure 3B may be combined with the method of figure 3A. After it has been determined that the first device is compatible, at step 250 the first device generates text data from the voice input data. As described herein, the text data may be generated by a mobile based application. The mobile based application may run one or more algorithms which are configured to perform STT.

After generation of the text data, the text data is sent from the first device to a server, at step 255. The text data is sent over a data channel of the telecommunication channel. In this example, the server generates voice data from the received text data 260. In one example implementation, the processing server is an edge server (e.g. a multi-access edge computing (MEC) component). However, any server having a suitable processer either within a core network or outside of the core network may be used to carry out these processing steps. The server may generate the voice data based on a user profile, using the same techniques as described herein. The user profile may be stored at the server, or may be sent to the server from the first or second device.

The generated voice data is sent to the second device in step 265. The second device therefore receives voice data. The voice data may be indistinguishable from voice data which has been sent from the first device to the second device via a normal voice channel. It will be appreciated that the voice data can be sent over the data channel from the first device to the second device, and speech output can be output at the second device, even when the second device does not have a compatible application installed.

Following the second device receiving voice data, the method proceeds to step 295. As the second device is not compatible with the method of TTS, the server carries out the TTS (depending on the direction of data transmission) instead of the second device.

If, at step 225, it is determined that the second device is compatible with TTS, but the first device is not compatible with STT, the method proceeds to step 275. The method steps for this embodiment are shown in figure 3C. At step 275, the input voice data is sent to a server. This server may be the same or different to the server to which the generated text data is sent in step 255.

In step 280, the server generates text data from the voice input data. At step 285, the generated text data is transmitted to the second device via a data channel of the telecommunication network.

At step 290, the second device converts the text data to voice output data. As described herein, the voice output data may be generated based on a user profile. Following the generation of the voice output data, the method proceeds to step 295.

At step 295, the voice output data is processed to generate speech output data, where speech output data can be output by the second device.

At step 2100 the quality of the speech output data is determined. The quality may be determined by the first and/or second device, or the server.

Although not shown herein, the method may be performed in the opposite direction. For example speech may be input to the second device, and it may be determined whether the second device is compatible with STT and whether the first device is compatible with TTS. In such an example, the same technical concepts and considerations apply.

Additionally, the methods of any of figures 3A, 3B or 3C may further comprise a step of translating the generated text data, such that the generated speech output data is output in a language different to the language of the input speech data. Any suitable translation software may be used to translate the generated text data. The text data may be translated by either the first and/or second device or the server, for example the text data may be translated within the mobile application on one of the devices or the server. Alternatively, an external server or processor (i.e. an external service) may be used to translate the text data prior to the voice output data being generated. The text is translated in real time, i.e. the text is translated during the call, wherein the text is translated sufficiently quickly that it does not interfere with the call. In other words the text is translated in live time. Therefore, the users of each device may have an uninterrupted conversation where each user is speaking a different language.

The methods described in relation to figures 3A, 3B and 3C are performed in real-time, such that during a call, the first device is continuously receiving speech input and the method described in any of figures 3A, 3B or 3C is carried out continuously when new speech input data is received. Therefore, the methods described herein are suitable to provide digital voice calls between a first and second device.

As described herein, the method of communication between the first and second device may be via a data channel or via a voice channel. The voice channel may be used if bandwidth is insufficient to provide the required call quality using a data channel. Therefore, the quality of the call is continuously determined during the call. The call may be initiated at a time in which the bandwidth is sufficient, such that the data is initially sent over a data channel using techniques described herein to reduce bandwidth usage by generating text data. However, available bandwidth may reduce during the call, and therefore the method may change to using a voice channel to transfer voice data from the first device to the second device.

Additionally or alternatively, voice data may be sent from a first device to a second device using a voice channel if it is determined that one of the first or second devices are not compatible with the method for transferring text data. Alternatively or additionally, if the MEC server is not available, for example if it is not possible to send text data to a server at step 255, the voice channel may be used to transmit voice data from a first device to a second device. However, it will be appreciated that the compatibility of the devices may change during the call, and therefore, the data may initially be sent from a first device to a second device, and vice versa, by the use of a voice channel. However, during the call the method of sending data may change such that the voice data is sent via a data channel using one or more of the methods described in relation to figures 2, 3A, 3B or 3C.

The first and/or second devices may be wireless mobile devices which comprise an application. The first and/or second devices may be any suitable device. For example, the device may have 8 CPU, GPU and 16 GB RAM.

In the example in which the first and second devices are smart phones, the application may be a mobile based application (i.e. mobile application) which is downloaded and installed on the first and/or second devices. The first and/or second mobile devices are configured to run the mobile based application. The first and/or second devices may have different applications installed, however the applications may be compatible with each other. The one or more applications may be configured to carry out one or more of the methods described in relation to figures 2, 3A, 3B or 3C. In one example, the one or more applications are configured to enable all of the methods of figures 2, 3A, 3B or 3C to be carried out on a mobile device.

For example, the mobile application may transcribe voice data to generate text data, and the mobile application may compress the text data. The mobile application may provide call context determination. In other words, a user may select a device/user with which they want to initiate a call, and the mobile application may determine whether the selected device (or the device associated with the selected user) has a compatible application which would enable a digital voice call to be performed (using the methods described herein). For example, the mobile application installed on the first device may recognise the second device based on previous voice calls between the first and second device and therefore determine that the second device is compatible, or the mobile application may be configured to determine whether the second device has a compatible application.

The mobile application may select the method for data transmission based on the compatibility of the second device, as described in relation to figure 3A. The mobile application may optionally host speech models, i.e. user profiles, of most frequently contacted users. In other words, the mobile device on which the mobile application is installed may store one or more user profiles, wherein one or more user profiles are associated with a device. For example, a user profile may be associated with a device B. Therefore, if the mobile application initiates a call with device B, the mobile application may use the user profile associated with device B to synthesise the user's voice during a call. In some uses, multiple users may use a device C, and therefore the mobile application may store multiple user profiles associated with device C. In this case, if a user selects to initiate a call with device C, the user may be required to select the relevant user profile. The user profile may be associated with the user's VolP client and/or MSISDN (Mobile Station International Subscriber Directory Number). Alternatively, the user profile may be associated with a telephone number or unique user ID. In some examples, the mobile application may comprise a machine learning model, such that the mobile application is used to train and build a model of the user's speech patterns to provide a user profile.

In some examples in which no data is available to train the model (for example if no previous calls have been made to this particular user), a default user profile (i.e. voiceprint) may be used. In other words, a non-personalised voiceprint may be used when generating voice output data from the generated text data. The user may be provided an option to use the default voice profile, or it may automatically be used. Additionally or alternatively, the mobile application may take the user (for which there is no voiceprint) through a training sequence to gather data which is required to create a voiceprint. For example, the mobile application may request that the user says pre-determined phrases, wherein the mobile application records the user, and builds a user profile using the recorded speech.

If the user does not want to use the default user profile, and no data is available to train and build a model of the user's speech patterns, the voice output data from the first device may be transmitted to the second device over the traditional voice channelsf of the telecommunication network. The voice channel may be used until the training of the model has been completed, either by performing additional calls, or using the training sequence describe above.

The first and/or second devices may be in wireless communication with a server, wherein the server is configured to perform the method steps described herein. In some examples, the server may be a MEC component, which may be hosted at the edge of the network closest to both the first and second devices. As described herein, the server may host user speech models (i.e. user profile) and facilitate download of the speech models to commonly contacted devices. Therefore, the first and/or second devices may download a user profile from the server.

Figures 4A, 4B and 4C illustrate examples which may be separate to, or combinable with the methods described in relation to figures 3A, 3B and 3C.

Figure 4A illustrates an example in which handset A and handset B (i.e. a first and second device) are in wireless communication via an internet connection. User A (i.e. first user) is using handset A, and user B (i.e. second user) is using handset B. In this example, both handsets A and B are compatible with text-to-speech, and speech-to-text. For example, both handsets may have a mobile application installed which enables such text-to-speech and speech-to-text methods to be performed. In this example, a user profile (otherwise referred to as a voiceprint or speech model) for handset A is downloaded onto handset B, and a user profile for handset B is downloaded onto handset A. The quality of the call (e.g. the latency), for example the quality of the speech output, may be monitored. In the example described in figure 4A, the latency of the transmission of data from handset A to handset B (and vice versa) is sufficient. The latency may be determined by a user or by one or both of the handsets. In this example the latency is OK (i.e. the latency is adequate), i.e. the latency does not reach a threshold. Based on one or more of the features of the handsets and the latency, voice input data is converted to text at handset A. The text is sent to handset B using a data channel. The text is then converted to voice output data at handset B using the voiceprint of user A.

Figure 4B illustrates another example method. In this example a user profile (otherwise referred to as a voiceprint) for handset A is downloaded onto handset B, and a user profile for handset B is downloaded onto handset A. In this example the latency of the communication between handsets A and B is adequate. In the example in which one or more of the devices is not compatible with both speech-to-text and text-to-speech conversion, the method may comprise sending data to and from a server, in at least one direction. In the example shown in figure 4B, only one handset is configured to convert speech to text, and/or only the other handset is configured to convert text to speech. In the example shown in figure 4B, handset A is only configured to convert text to speech, and handset B is only configured to convert speech to text. Therefore, input voice data may be converted to text at device B, and the text may be sent to device A directly. In this example device A converts the received text data to output voice data. However, in order to communicate in the other direction, i.e. from device A to device B, the method comprises sending voice data from device A to a server. The server may convert the received voice data to text and/or may convert text data to speech. However, the server may also simply receive input voice data, and send the voice data to device B, without performing any conversion. As described in relation to figures 3B and 3C, the server may receive speech input data and convert the speech data to text data, or the sever may receive text data and convert the text data to speech data. The sever may be a MEC server. In one example a plurality of servers may be used, such that one server received input voice data from a device, and converts the input voice data to text data, and sends the text data to a second server. The second server may convert text data to output voice data, and send the output voice data to a device.

In the example in which only one handset is configured to convert speech to text, and only the other handset is configured to convert text to speech, a voice channel may instead be used to transmit voice data from one handset to the other. In such an example, the data may be transmitted along a data channel, using text to speech and speech to text (as described herein in relation to figure 4A). However, to transmit voice data in the opposite direction, a voice channel may be used without converting speech to text or converting text to speech.

Therefore, as described in relation to figure 4B, it may be determined that a server should be used based on compatibility of the two devices involved in the digital call. Therefore, before initiating a call, the compatibility of the devices may be determined.

The method described in relation to figure 4B also comprises a step of monitoring the quality of the speech output. If the quality of the speech output reaches a threshold, the method may be altered to transmit the voice and/or text data via a different server. Alternatively, the voice data may be transmitted directly from the first device to the second device (or vice versa) using a voice channel, as described in relation to figure 4C.

Figure 4C illustrates an embodiment in which each handset is compatible with text-to-speech and speech-to-text. However, in this example the latency of data transmission between the two handsets is not adequate. In other words, the quality (e.g. latency) for transmitting text or voice data between the first and second handsets has reached a threshold. In this example the method may further comprise sending text data to and/or from a server. The method in either figures 3B or 3C may be used. In one example, voice input data is converted to text data at the first handset, and the text data is transmitted from the first handset to the server. At the server, the text data is converted to voice output data and transmitted to the second handset. In a different example, the voice input data may be transmitted to the server where the voice input data is converted to text data. The text data is then transmitted from the server to the second handset, where the text data is converted to voice output data.

In another example, in which latency reaches a threshold, the text data is generated at the first device from voice input data. The generated text data is sent from the first device to the server. The server then transmits the text data to the second device where the second device converts the text data to voice output data. This method reduces the latency of the voice call compared to sending text data from the first device to the second device. If the latency still reaches the threshold, the method may fall back to using a voice channel to communicate between the first and second device.

Therefore, it will be appreciated that the methods described herein, for example in relation to figures 2, 3A, 3B,3C, 4A, 4B, 4C may be performed by one or more mobile applications installed on the first and/or second devices, or the methods may be performed by a mobile device.

The first and second devices comprise one or more processors configured to perform the method steps described herein.

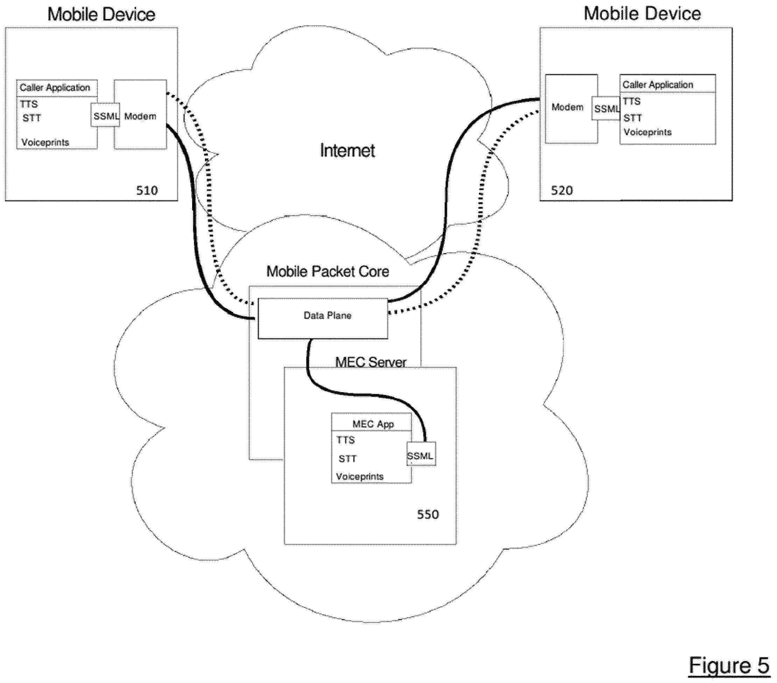

Figure 5 illustrates a system configured to perform a method according to one or more examples described herein. The system comprises two mobile devices 510, 520 and an MEC server 550. Each mobile device comprises a mobile application (referred to as a caller application), wherein the mobile application has TTS and STT functionality (although in some examples the mobile device may not have both TTS and STT functionality), and the mobile application is also configured to store one or more voiceprints (i.e. user profiles). Each mobile device also has SSML functionality. In other words, the mobile device may be configured to use SSML for text-to-speech. The SSML functionality may be independent of the mobile application, or the functionality may be performed by the mobile application. The mobile devices each also comprise a modem for connecting to one or more networks. For example the modem may be a cellular modem. Each device is configured to send data to and receive data from (shown by dashed line and solid line) a data plane 560. The server is in communication with the data plane, and has TTS and STT functionality. The server is configured to store one or more voiceprints. The server also may have SSML functionality.

The solution described herein may use a User Datagram Protocol (UDP) or Transmission Control Protocol (TCP) for transmission of data between a first and second device, or a device and a server, at the transport layer. Security may be applied to the transport layer. For example, if the protocol layer is TCP based, Transport Layer Security (TLS) may be used. Therefore, a TLS security protocol communication may be set up between the first and second devices, and/or between a device and the server. Alternatively, if the protocol layer is UDP based, a Datagram Transport Layer Security (DTLS) connection may be established instead of TLS. Therefore, by using a security protocol, communications may be sent between devices, or between devices and servers, in a secure manner. This is beneficial for example in an embodiment in which the text data, described herein, is not encrypted prior to being sent between devices. Therefore, a secure means of communication between a first and second device is provided. It will be appreciated that other types of network security could be used, where the network security may be selected based on which telecoms network is used, and their protocols.

There may additionally be an underlying protocol layer, which is configured to provide acknowledgement of receipt for sent messages. For example, Constrained Application Protocol (CoAP) may be used, which operates over UDP or DTLS, and may send confirmable messages, wherein the message is transmitted until the acknowledgement is received. Therefore, the use of CoAP provides a reliable communication with high efficiency. CoAP also provides the option for non-confirmable messaging, which provides a faster communication without requiring acknowledgement. Alternatively, the underlying protocol layer may be HTTP over TCP or TLS, where a response provided after an HTTP request. Therefore, an acknowledgement of receipt may be provided by either the device or server in the methods described herein.

In the methods described herein, there may be an agreed schema for the text-to-speech generation. The schema allows for the text-to-speech to enable syntax, inflexion etc to be taken into account during text-to-speech. For example, Speech Synthesis Markup Language (SSML) may be used to achieve this. In other words, the generated text may be generated using SSML. SSML is an XML based markup language for speech synthesis applications. SSML can be included in the text-to-speech requests described herein, to enable the synthesised voice to be customised, for example to include syntax and inflexion. Therefore, in the methods described herein, speech data is converted to text data, and subsequently the text may be further translated to SSML to be sent according to the particular method.

The methods described herein may be implemented with computer system configurations including hand-held devices, microprocessor systems, microprocessor-based or programmable consumer electronics, minicomputers, mainframe computers and the like. The embodiments can also be practiced in distributed computing environments, where tasks are performed by remote processing devices that are linked through a network.

The computer system may include a processor, such as a central processing unit (CPU). The processor may execute logic in the form of a software program. The computer system may include a memory including volatile and non-volatile storage medium. The different parts of the system may be connected using a network (e.g. wireless networks and wired networks). The computer system may include one or more interfaces. The computer may contain a suitable operating system such as UNIX (including Linux) or Windows (RTM), for example.

Certain embodiments can also be embodied as computer-readable code on a non-transitory computer-readable medium. The computer readable medium may be any data storage device than can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion. Although embodiments according to the disclosure have been described with reference to particular types of devices and applications (particularly augmented reality devices) and the embodiments have particular advantages in such case, as discussed herein, approaches according to the disclosure may be applied to other types of device and/or application.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

It will be appreciated that there is an implied "about" prior to temperatures, concentrations, times, pressures, flow rates, cross-sectional areas, voltages, currents, etc. discussed in the present teachings, such that slight and insubstantial deviations are within the scope of the present teachings. Furthermore, values referred to as being "equal" may in fact differ by less than a threshold amount. The threshold amount may be 5%, for example. The threshold may also be greater than 5% (e.g., 10%, 20% or 50%) or less than 5% (for example, 2% or 1 %), depending on the context.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a component) means "one or more" (for instance, one or more components).

Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the invention. That is, an element termed a "first" element (e.g., a first component) may instead be termed a "second" element (e.g., a second component) and an element termed a "second" element (e.g., a second component) may instead be considered a "first" element (e.g. a first component).

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein.

## Claims

1. A method for real-time voice communication over a telecommunication network having a voice channel and a data channel, the method comprising:
receiving, at the first device (10, 510), speech input from a first user;
determining whether the first device (10, 510) is compatible with speech-to-text, and whether a second device (20, 520) is compatible with text-to-speech;
generating voice input data, at the first device (10, 510), based on the received speech input;
generating text data from the received voice input data at the first device (10, 510) or at a server (50, 550), wherein the location of the generation of the text data is based on the determined compatibility of the first device (10, 510);
generating voice output data from the generated text data at a server (50, 550) or at the second device (20, 520), wherein the generated voice output data is generated based on a first user profile, wherein the first user profile is a profile associated with the first user, wherein the location of the generation of the voice output data is based on the determined compatibility of the second device (20, 520);
processing, at the second device (20, 520), the voice output data to generate speech output;
outputting, at the second device (20, 520), the generated speech output; and
monitoring the quality of the generated speech output.

2. A method according to claim 1 where it is determined that the first device (10, 510) is compatible with speech-to-text and the second device (20, 520) is compatible with text-to-speech, and wherein the step of generating the text data is performed at the first device (10, 510), and the step of generating voice output data is performed at the second device (20, 520), and wherein the method further comprises:
sending the generated text data from the first device (10, 510) to the second device (20, 520), over a data channel of the telecommunication network.

3. A method according to claim 2 wherein if it is determined that the quality of the speech output reaches a threshold, the method further comprises:
sending the voice output data from the first device (10, 510) to the second device (20, 520) over the voice channel of the telecommunication network.

4. A method according to claim 1 where it is determined that the second device (20, 520) is not compatible with speech-to-text, wherein the step of generating the text data is performed at the first device (10, 510), and the step of generating the voice output data is performed at a server (50, 550), and the method further comprises:
sending, over the data channel of the telecommunication network, the generated text data from the first device (10, 510) to the server (50, 550); and
sending, over the data channel of the telecommunication network, prior to processing the voice output data, the generated voice output data from the server (50, 550) to the second device (20, 520).

5. A method according to claim 1 where it is determined that the first device (10, 510) is not compatible with text-to-speech, wherein the step of generating the text data is performed at a server (50, 550), and the step of generating the voice output data is performed at the second device (20, 520), and the method further comprises:
sending, over the data channel of the telecommunication network, prior to generating the text data, the input voice data from the first device (10, 510) to the server (50, 550); and
sending, over the data channel of the telecommunication network, the generated text data from the server (50, 550) to the second device (20, 520).

6. A method according to any of claims 2 to 5 further comprising, prior to sending generated text data and/or generated voice output data, establishing one of a Datagram Transport Layer Security, DTLS, and a Transport Layer Security, TLS, between the first (10, 510) and second device (20, 520), or between a server (50, 550) and the first (10, 510) and/or second devices (20, 520).

7. A method according to any of claims 4 to 6 wherein if it is determined that the quality of the speech output exceeds a threshold, wherein the threshold is latency, the method further comprises:
switching from the server (50, 550) to a multiaccess edge computing, MEC, server (50, 550), wherein the MEC server (50, 550) is in communication with the first (10, 510) and second devices (20, 520), and the MEC server (50, 550) is configured to generate text data and/or generate voice output data.

8. A method according to any of claims 4 to 7 wherein if it is determined that the quality of the speech output exceeds a threshold, wherein the threshold is latency, the method further comprises:
sending the voice output data from the first device (10, 510) to the second device (20, 520) over the voice channel of the telecommunication network.

9. A method according to claim 1 wherein monitoring the quality of the generated speech output comprises receiving quality information from a second user, wherein the second user is a user of the second device (20, 520).

10. A method according to any preceding claim, further comprising compressing the generated text data into a data stream.

11. A method according to any preceding claim further comprising building the first user profile at the first (10, 510) and/or second device (20, 520), wherein the first user profile comprises information for replicating the first user's speech patterns.

12. A method according to any preceding claim wherein the first user profile is stored at:
the first (10, 510) and/or second device (20, 520); and/or
a network server (50, 550), wherein the server (50, 550) is in wireless communication with at least one of the first (10, 510) or second devices (20, 520).

13. A second mobile device (20, 520) configured to be connected to a telecommunication network having a voice channel and a data channel, where the second mobile device (20, 520) is configured to be in wireless communication with a first device (10, 510) and a server (50, 550), the second mobile device (20, 520) comprising:
at least one processor; and
memory storing instructions that, when executed by the at least one processor, cause the mobile device (20, 520) to perform operations including:
receiving text data, the text data being generated from voice input data received at the first device (10, 510);
determining whether the second device (20, 520) is compatible with text-to-speech;
generating voice output data from the generated text data at the server (50, 550) or at the second device (20, 520), wherein the generated voice output data is generated based on a first user profile, wherein the user profile is a profile associated with the first user, wherein the first user is a user of the first device (10, 510), wherein the location of the generation of the voice output data is based on the determined compatibility of the second device (20, 520);
processing the voice output data to generate speech output;
outputting the generated speech output; and
monitoring the quality of the speech output.

14. A system (5) comprising:
a second mobile device (20, 520) according to claim 13; and
a first device (10, 510) configured to be connected to a telecommunication network having a voice channel and a data channel, and configured to be in wireless communication with the second mobile device (20, 520); and
a server (50, 550) in wireless communication with the first (10, 510) and second (20, 520) mobile devices, wherein the server (50, 550) is configured to generate text data from voice input data and the server (50, 550) is configured to generate voice output data from generated text data;
wherein the first device (10, 510) is a mobile device comprising:
at least one processor; and
memory storing instructions that, when executed by the at least one processor, cause the mobile device to perform operations including:
receiving speech input from a first user;
determining whether the first device (10, 510) is compatible with speech-to-text;
generating the voice input data based on the received speech input; and
generating the text data from the voice input data at the first device (10, 510) or at the server (50, 550), wherein the location of the generation of the text data is based on the determined compatibility of the first device (10, 510).

## Patentansprüche

1. Verfahren zur Echtzeitsprachkommunikation über ein Telekommunikationsnetz mit einem Sprachkanal und einem Datenkanal, wobei das Verfahren umfasst:
Empfangen, an der ersten Vorrichtung (10, 510), einer Spracheingabe von einem ersten Benutzer;
Bestimmen, ob die erste Vorrichtung (10, 510) mit Sprache-zu-Text kompatibel ist und ob eine zweite Vorrichtung (20, 520) mit Text-zu-Sprache kompatibel ist;
Generieren, an der ersten Vorrichtung (10, 510), von Spracheingabedaten auf Basis der empfangenen Spracheingabe;
Generieren, aus den empfangenen Spracheingabedaten, von Textdaten an der ersten Vorrichtung (10, 510) oder an einem Server (50, 550), wobei der Ort der Generierung der Textdaten auf der bestimmten Kompatibilität der ersten Vorrichtung (10, 510) basiert;
Generieren, aus den generierten Textdaten, von Sprachausgabedaten an einem Server (50, 550) oder an der zweiten Vorrichtung (20, 520), wobei die generierten Sprachausgabedaten auf Basis eines ersten Benutzerprofils generiert werden, wobei es sich bei dem ersten Benutzerprofil um ein dem ersten Benutzer zugeordnetes Profil handelt, wobei der Ort der Generierung der Sprachausgabedaten auf der bestimmten Kompatibilität der zweiten Vorrichtung (20, 520) basiert;
Verarbeiten, an der zweiten Vorrichtung (20, 520), der Sprachausgabedaten zum Generieren einer Sprachausgabe;
Ausgeben, an der zweiten Vorrichtung (20, 520), der generierten Sprachausgabe; und
Überwachen der Qualität der generierten Sprachausgabe.

2. Verfahren nach Anspruch 1, wobei bestimmt wird, dass die erste Vorrichtung (10, 510) mit Sprache-zu-Text kompatibel ist und die zweite Vorrichtung (20, 520) mit Text-zu-Sprache kompatibel ist, und wobei der Schritt des Generierens der Textdaten an der ersten Vorrichtung (10, 510) durchgeführt wird und der Schritt des Generierens von Sprachausgabedaten an der zweiten Vorrichtung (20, 520) durchgeführt wird, und wobei das Verfahren ferner umfasst:
Senden der generierten Textdaten von der ersten Vorrichtung (10, 510) an die zweite Vorrichtung (20, 520) über einen Datenkanal des Telekommunikationsnetzes.

3. Verfahren nach Anspruch 2, wobei das Verfahren ferner umfasst, wenn bestimmt wird, dass die Qualität der Sprachausgabe einen Schwellenwert erreicht:
Senden der Sprachausgabedaten von der ersten Vorrichtung (10, 510) an die zweite Vorrichtung (20, 520) über den Sprachkanal des Telekommunikationsnetzes.

4. Verfahren nach Anspruch 1, wobei bestimmt wird, dass die zweite Vorrichtung (20, 520) nicht mit Sprache-zu-Text kompatibel ist, wobei der Schritt des Generierens der Textdaten an der ersten Vorrichtung (10, 510) durchgeführt wird und der Schritt des Generierens von Sprachausgabedaten an einem Server (50, 550) durchgeführt wird und das Verfahren ferner umfasst:
Senden, über den Datenkanal des Telekommunikationsnetzes, der generierten Textdaten von der ersten Vorrichtung (10, 510) an den Server (50, 550); und
Senden, über den Datenkanal des Telekommunikationsnetzes, vor dem Verarbeiten der Sprachausgabedaten, der generierten Sprachausgabedaten von dem Server (50, 550) an die zweite Vorrichtung (20, 520).

5. Verfahren nach Anspruch 1, wobei bestimmt wird, dass die erste Vorrichtung (10, 510) nicht mit Text-zu-Sprache kompatibel ist, wobei der Schritt des Generierens der Textdaten an einem Server (50, 550) durchgeführt wird und der Schritt des Generierens der Sprachausgabedaten an der zweiten Vorrichtung (20, 520) durchgeführt wird und das Verfahren ferner umfasst:
Senden, über den Datenkanal des Telekommunikationsnetzes, vor dem Generieren der Textdaten, der Spracheingabedaten von der ersten Vorrichtung (10, 510) an den Server (50, 550); und
Senden, über den Datenkanal des Telekommunikationsnetzes, der generierten Textdaten von dem Server (50, 550) an die zweite Vorrichtung (20, 520).

6. Verfahren nach einem der Ansprüche 2 bis 5, ferner umfassend, vor dem Senden generierter Textdaten und/oder generierter Sprachausgabedaten, das Einrichten einer von einer Datagram Transport Layer Security (DTLS) und einer Transport Layer Security (TLS) zwischen der ersten (10, 510) und zweiten Vorrichtung (20, 520) oder zwischen einem Server (50, 550) und der ersten (10, 510) und/oder zweiten Vorrichtung (20, 520).

7. Verfahren nach einem der Ansprüche 4 bis 6, wobei das Verfahren ferner umfasst, wenn bestimmt wird, dass die Qualität der Sprachausgabe über einem Schwellenwert liegt, wobei der Schwellenwert eine Latenz ist:
Wechseln von dem Server (50, 550) zu einem Multi-Access-Edge-Computing-Server (MEC-Server) (50, 550), wobei der MEC-Server (50, 550) mit der ersten (10, 510) und zweiten Vorrichtung (20, 520) kommuniziert und der MEC-Server (50, 550) zum Generieren von Textdaten und/oder zum Generieren von Sprachausgabedaten konfiguriert ist.

8. Verfahren nach einem der Ansprüche 4 bis 7, wobei das Verfahren ferner umfasst, wenn bestimmt wird, dass die Qualität der Sprachausgabe über einem Schwellenwert liegt, wobei der Schwellenwert eine Latenz ist:
Senden der Sprachausgabedaten von der ersten Vorrichtung (10, 510) an die zweite Vorrichtung (20, 520) über den Sprachkanal des Telekommunikationsnetzes.

9. Verfahren nach Anspruch 1, wobei das Überwachen der Qualität der generierten Sprachausgabe das Empfangen von Qualitätsinformationen von einem zweiten Benutzer umfasst, wobei es sich bei dem zweiten Benutzer um einen Benutzer der zweiten Vorrichtung (20, 520) handelt.

10. Verfahren nach einem vorstehenden Anspruch, ferner umfassend das Komprimieren der generierten Textdaten in einen Datenstrom.

11. Verfahren nach einem vorstehenden Anspruch, ferner umfassend das Erstellen des ersten Benutzerprofils an der ersten (10, 510) und/oder zweiten Vorrichtung (20, 520), wobei das erste Benutzerprofil Informationen zum Replizieren der Sprachmuster des ersten Benutzers umfasst.

12. Verfahren nach einem vorstehenden Anspruch, wobei das erste Benutzerprofil gespeichert wird in:
der ersten (10, 510) und/oder zweiten Vorrichtung (20, 520); und/oder
einem Netzserver (50, 550), wobei der Server (50, 550) drahtlos mit mindestens einer der ersten (10, 510) oder zweiten Vorrichtung (20, 520) kommuniziert.

13. Zweite mobile Vorrichtung (20, 520), die konfiguriert ist, um mit einem Telekommunikationsnetz mit einem Sprachkanal und einem Datenkanal verbunden zu werden, wobei die zweite mobile Vorrichtung (20, 520) für eine drahtlose Kommunikation mit einer ersten Vorrichtung (10, 510) und einem Server (50, 550) konfiguriert ist, wobei die zweite mobile Vorrichtung (20, 520) umfasst:
mindestens eine Verarbeitungseinheit; und
Speicher mit darin gespeicherten Anweisungen, die bei Ausführung durch die mindestens eine Verarbeitungseinheit veranlassen, dass die die mobile Vorrichtung (20, 520) Vorgänge durchführt, beinhaltend:
Empfangen von Textdaten, wobei die Textdaten aus Spracheingabedaten generiert werden, die an der ersten Vorrichtung (10, 510) empfangen wurden;
Bestimmen, ob die zweite Vorrichtung (20, 520) mit Text-zu-Sprache kompatibel ist;
Generieren von Sprachausgabedaten aus den generierten Textdaten an dem Server (50, 550) oder an der zweiten Vorrichtung (20, 520), wobei die generierten Sprachausgabedaten auf Basis des ersten Benutzerprofils generiert werden, wobei es sich bei dem Benutzerprofil um ein dem ersten Benutzer zugeordnetes Profil handelt, wobei der erste Benutzer ein Benutzer der ersten Vorrichtung (10, 510) ist, wobei der Ort der Generierung der Sprachausgabedaten auf der bestimmten Kompatibilität der zweiten Vorrichtung (20, 520) basiert;
Verarbeiten der Sprachausgabedaten zum Generieren einer Sprachausgabe;
Ausgeben der generierten Sprachausgabe; und
Überwachen der Qualität der Sprachausgabe.

14. System (5), umfassend:
eine zweite mobile Vorrichtung (20, 520) nach Anspruch 13; und
eine erste Vorrichtung (10, 510), die konfiguriert ist, um mit einem Telekommunikationsnetz mit einem Sprachkanal und einem Datenkanal verbunden zu werden, und die für eine drahtlose Kommunikation mit der zweiten mobilen Vorrichtung (20, 520) konfiguriert ist; und
einen Server (50, 550), der drahtlos mit der ersten (10, 510) und zweiten (20, 520) mobilen Vorrichtung kommuniziert, wobei der Server (50, 550) zum Generieren von Textdaten aus Spracheingabedaten konfiguriert ist und der Server (50, 550) zum Generieren von Sprachausgabedaten aus generierten Textdaten konfiguriert ist; wobei es sich bei der ersten Vorrichtung (10, 510) um eine mobile Vorrichtung handelt, umfassend:
mindestens eine Verarbeitungseinheit; und
Speicher mit darin gespeicherten Anweisungen, die bei Ausführung durch die mindestens eine Verarbeitungseinheit veranlassen, dass die mobile Vorrichtung Vorgänge durchführt, beinhaltend:
Empfangen einer Spracheingabe von einem ersten Benutzer;
Bestimmen, ob die erste Vorrichtung (10, 510) mit Sprache-zu-Text kompatibel ist;
Generieren der Spracheingabedaten auf Basis der empfangenen Spracheingabe; und
Generieren der Textdaten aus den Spracheingabedaten an der ersten Vorrichtung (10, 510) oder an dem Server (50, 550), wobei der Ort der Generierung der Textdaten auf der bestimmten Kompatibilität der ersten Vorrichtung (10, 510) basiert.

## Revendications

1. Procédé de communication vocale en temps réel sur un réseau de télécommunication ayant un canal de voix et un canal de données, le procédé comprenant :
la réception, au niveau du premier dispositif (10, 510), d'une entrée de parole à partir d'un premier utilisateur ;
la détermination du fait que le premier dispositif (10, 510) est ou non compatible avec la conversion de parole en texte, et du fait qu'un deuxième dispositif (20, 520) est ou non compatible avec la conversion de texte en parole ;
la génération de données d'entrée de voix, au niveau du premier dispositif (10, 510), sur la base de l'entrée de parole reçue ;
la génération de données de texte à partir des données d'entrée de voix reçues au niveau du premier dispositif (10, 510) ou au niveau d'un serveur (50, 550), dans lequel l'emplacement de la génération des données de texte est basé sur la compatibilité déterminée du premier dispositif (10, 510) ;
la génération de données de sortie de voix à partir des données de texte générées au niveau d'un serveur (50, 550) ou au niveau du deuxième dispositif (20, 520), dans lequel les données de sortie de voix générées sont générées sur la base d'un profil de premier utilisateur, dans lequel le profil de premier utilisateur est un profil associé au premier utilisateur, dans lequel l'emplacement de la génération des données de sortie de voix est basé sur la compatibilité déterminée du deuxième dispositif (20, 520) ;
le traitement, au niveau du deuxième dispositif (20, 520), des données de sortie de voix pour générer une sortie de parole ;
la fourniture en sortie, au niveau du deuxième dispositif (20, 520), de la sortie de parole générée ; et
la surveillance de la qualité de la sortie de parole générée.

2. Procédé selon la revendication 1 où il est déterminé que le premier dispositif (10, 510) est compatible avec la conversion de parole en texte et que le deuxième dispositif (20, 520) est compatible avec la conversion de texte en parole, et dans lequel l'étape de génération des données de texte est réalisée au niveau du premier dispositif (10, 510), et l'étape de génération de données de sortie de voix est réalisée au niveau du deuxième dispositif (20, 520), et dans lequel le procédé comprend en outre :
l'envoi des données de texte générées du premier dispositif (10, 510) au deuxième dispositif (20, 520), sur un canal de données du réseau de télécommunication.

3. Procédé selon la revendication 2 dans lequel s'il est déterminé que la qualité de la sortie de parole atteint un seuil, le procédé comprend en outre :
l'envoi des données de sortie de voix du premier dispositif (10, 510) au deuxième dispositif (20, 520) sur le canal de voix du réseau de télécommunication.

4. Procédé selon la revendication 1 où il est déterminé que le deuxième dispositif (20, 520) n'est pas compatible avec la conversion de parole en texte, dans lequel l'étape de génération des données de texte est réalisée au niveau du premier dispositif (10, 510), et l'étape de génération des données de sortie de voix est réalisée au niveau d'un serveur (50, 550), et le procédé comprend en outre :
l'envoi, sur le canal de données du réseau de télécommunication, des données de texte générées du premier dispositif (10, 510) au serveur (50, 550) ; et
l'envoi, sur le canal de données du réseau de télécommunication, avant le traitement des données de sortie de voix, des données de sortie de voix générées du serveur (50, 550) au deuxième dispositif (20, 520).

5. Procédé selon la revendication 1 où il est déterminé que le premier dispositif (10, 510) n'est pas compatible avec la conversion de texte en parole, dans lequel l'étape de génération des données de texte est réalisée au niveau d'un serveur (50, 550), et l'étape de génération des données de sortie de voix est réalisée au niveau du deuxième dispositif (20, 520), et le procédé comprend en outre :
l'envoi, sur le canal de données du réseau de télécommunication, avant la génération des données de texte, des données d'entrée de voix du premier dispositif (10, 510) au serveur (50, 550) ; et
l'envoi, sur le canal de données du réseau de télécommunication, des données de texte générées du serveur (50, 550) au deuxième dispositif (20, 520).

6. Procédé selon l'une quelconque des revendications 2 à 5 comprenant en outre, avant l'envoi de données de texte générées et/ou de données de sortie de voix générées, l'établissement d'une sécurité de couche de transport en datagrammes, DTLS, et/ou d'une sécurité de couche de transport, TLS, entre le premier (10, 510) et le deuxième dispositif (20, 520), ou entre un serveur (50, 550) et le premier (10, 510) et/ou le deuxième dispositif (20, 520).

7. Procédé selon l'une quelconque des revendications 4 à 6 dans lequel s'il est déterminé que la qualité de la sortie de parole dépasse un seuil, dans lequel le seuil est une latence, le procédé comprend en outre :
la commutation du serveur (50, 550) à un serveur informatique en périphérie à accès multiples, MEC (50, 550), dans lequel le serveur MEC (50, 550) est en communication avec les premier (10, 510) et deuxième dispositifs (20, 520), et le serveur MEC (50, 550) est configuré pour générer des données de texte et/ou générer des données de sortie de voix.

8. Procédé selon l'une quelconque des revendications 4 à 7 dans lequel s'il est déterminé que la qualité de la sortie de parole dépasse un seuil, dans lequel le seuil est une latence, le procédé comprend en outre :
l'envoi des données de sortie de voix du premier dispositif (10, 510) au deuxième dispositif (20, 520) sur le canal de voix du réseau de télécommunication.

9. Procédé selon la revendication 1 dans lequel la surveillance de la qualité de la sortie de parole générée comprend la réception d'informations de qualité à partir d'un deuxième utilisateur, dans lequel le deuxième utilisateur est un utilisateur du deuxième dispositif (20, 520).

10. Procédé selon l'une quelconque des revendications précédentes, comprenant en outre la compression des données de texte générées en un flux de données.

11. Procédé selon l'une quelconque des revendications précédentes comprenant en outre l'élaboration du profil de premier utilisateur au niveau du premier (10, 510) et/ou du deuxième dispositif (20, 520), dans lequel le profil de premier utilisateur comprend des informations destinées à reproduire un modèle de parole du premier utilisateur.

12. Procédé selon l'une quelconque des revendications précédentes dans lequel le profil de premier utilisateur est stocké au niveau :
du premier (10, 510) et/ou du deuxième dispositif (20, 520) ; et/ou
d'un serveur (50, 550) de réseau, dans lequel le serveur (50, 550) est en communication sans fil avec le premier (10, 510) et/ou le deuxième dispositif (20, 520).

13. Deuxième dispositif (20, 520) mobile configuré pour être connecté à un réseau de télécommunication ayant un canal de voix et un canal de données, où le deuxième dispositif (20, 520) mobile est configuré pour être en communication sans fil avec un premier dispositif (10, 510) et un serveur (50, 550), le deuxième dispositif (20, 520) mobile comprenant :
au moins un processeur ; et
une mémoire stockant des instructions qui, lorsqu'elles sont exécutées par l'au moins un processeur, amènent le dispositif (20, 520) mobile à réaliser des opérations comportant :
la réception de données de texte, les données de texte étant générées à partir de données d'entrée de voix reçues au niveau du premier dispositif (10, 510) ;
la détermination du fait que le deuxième dispositif (20, 520) est ou non compatible avec la conversion de texte en parole ;
la génération de données de sortie de voix à partir des données de texte générées au niveau du serveur (50, 550) ou au niveau du deuxième dispositif (20, 520), dans lequel les données de sortie de voix générées sont générées sur la base d'un profil de premier utilisateur, dans lequel le profil d'utilisateur est un profil associé au premier utilisateur, dans lequel le premier utilisateur est un utilisateur du premier dispositif (10, 510), dans lequel l'emplacement de la génération des données de sortie de voix est basé sur la compatibilité déterminée du deuxième dispositif (20, 520) ;
le traitement des données de sortie de voix pour générer une sortie de parole ;
la fourniture en sortie de la sortie de parole générée ; et
la surveillance de la qualité de la sortie de parole.

14. Système (5) comprenant :
un deuxième dispositif (20, 520) mobile selon la revendication 13 ; et
un premier dispositif (10, 510) configuré pour être connecté à un réseau de télécommunication ayant un canal de voix et un canal de données, et configuré pour être en communication sans fil avec le deuxième dispositif (20, 520) mobile ; et
un serveur (50, 550) en communication sans fil avec les premier (10, 510) et deuxième (20, 520) dispositifs mobiles, dans lequel le serveur (50, 550) est configuré pour générer des données de texte à partir de données d'entrée de voix et le serveur (50, 550) est configuré pour générer des données de sortie de voix à partir des données de texte générées ;
dans lequel le premier dispositif (10, 510) est un dispositif mobile comprenant :
au moins un processeur ; et
une mémoire stockant des instructions qui, lorsqu'elles sont exécutées par l'au moins un processeur, amènent le dispositif mobile à réaliser des opérations comportant :
la réception d'une entrée de parole à partir d'un premier utilisateur ;
la détermination du fait que le premier dispositif (10, 510) est ou non compatible avec la conversion de parole en texte ;
la génération des données d'entrée de voix sur la base de l'entrée de parole reçue ; et
la génération des données de texte à partir des données d'entrée de voix au niveau du premier dispositif (10, 510) ou au niveau du serveur (50, 550), dans lequel l'emplacement de la génération des données de texte est basé sur la compatibilité déterminée du premier dispositif (10, 510).
